Europäisches Patentamt

**European Patent Office** (11) Veröffentlichungsnummer: **0 182 039**

**Office européen des brevets** **B1**

(12) **EUROPÄISCHE PATENTSCHRIFT**

(45) Veröffentlichungstag der Patentschrift: (51) Int. Cl.⁴: **F 16 B 13/14**
27.04.88

(21) Anmeldenummer: **85112016.2**

(22) Anmeldetag: **23.09.85**

(54) Zerstörbare Verankerungspatrone.

(30) Priorität: **20.11.84 DE 3442383**

(43) Veröffentlichungstag der Anmeldung:
**28.05.86 Patentblatt 86/22**

(45) Bekanntmachung des Hinweises auf die Patenterteilung:
**27.04.88 Patentblatt 88/17**

(84) Benannte Vertragsstaaten:
**CH DE FR GB LI**

(56) Entgegenhaltungen:
**CH-A-588 644**
**CH-A-604 025**
**DE-A-2 554 628**
**DE-B-2 518 135**
**DE-C-2 059 852**

(73) Patentinhaber: **HILTI Aktiengesellschaft, FL- 9494 Schaan (LI)**

(72) Erfinder: **Mauthe, Peter, Dipl.- Chem., Voestweg 10, D-8065 Kleinberghofen (DE)**

(74) Vertreter: **Wildi, Roland, Hilti Aktiengesellschaft Patentabteilung, FL- 9494 Schaan (LI)**

## Beschreibung

Die Erfindung betrifft eine zerstörbare Mehrkammerpatrone zur Verankerung von Ankerstangen in Bohrlöchern eines Aufnahmematerials, mittels aushärtender, im wesentlichen aus Harz, Härter und Füllstoffen bestehender Mehrkomponenten-Masse, wobei die Patrone in ihrem in Setzrichtung rückwärtigen Bereich nahezu den gesamten Querschnitt einnehmende Füllstoffe sowie gegebenenfalls Härter und in ihrem restlichen Bereich Harz und weitere Füllstoffe enthält.

Wegen ihrer Vorteile, wie kein Spreizdruck, hohe statische und dynamische Belastbarkeit sowie gute chemische Beständigkeit, werden Verankerungen mittels aushärtender Massen heute in einem beträchtlichen Anteil aller Befestigungen verwendet. Ein gewisser Nachteil tritt bei der Herstellung solcher Verankerungen auf, in dem diese meistens nicht sofort belastbar sind und die noch nicht ausgehärtete Masse bei Befestigungen an Wänden oder Decken zum Auslaufen neigt. Um auch diesem Nachteil zu begegnen, wurde versucht, Harze mit höherer Viskosität, dh zähflüssigere Harze zu verwenden. Solche Harze führen aber zu einem grossen Kraftaufwand für den Mischvorgang. Ausserdem ist ab einer gewissen Viskosität die Benetzung der Bohrlochwandung mit dem Harz nicht mehr gewährleistet. Da der an der Bohrlochwandung vorhandene Bohrstaub von einer zähflüssigen Masse nicht gebunden wird, können sich zudem Trennschichten bilden, welche zu einer Herabsetzung des Verankerungswertes führen.

Bei einer bekannten Verankerungspatrone (DE-A-2 554 628 wurde versucht, das Auslaufen des Harzes aus dem Bohrloch dadurch zu verhindern, dass die Patrone an ihrem in Setzrichtung rückwärtigen Endbereich nahezu den gesamten Querschnitt einnehmende Füllstoffe und Härter aufweist. Beim Einsetzen einer solchen Patrone in ein Bohrloch kommt der rückwärtige Bereich der Patrone somit in die Nähe der Bohrlochmündung zu liegen. Durch die Konzentration von Härter und Füllstoffen beginnt der Aushärtungsvorgang beim Zerstören der Patrone im Bohrloch somit vom rückwärtigen Ende her. Das ganz oder teilweise ausgehärtete Harz bildet einen Pfropfen, der ein Auslaufen des noch flüssigen Harzes aus dem vorderen Bereich des Bohrloches verhindert.

Die ausschliessliche Anordnung des Härters im rückwärtigen Endbereich verhindert im allgemeinen eine genügende Verteilung des Härters im Harz während des Setzvorganges. Die Folge davon ist, dass das Harz in den vorderen, d. h. tieferen Bereichen des Bohrloches erst nach sehr langer Zeit oder überhaupt nicht aushärtet, was sich schädlich auf die Qualität der Verankerung auswirkt.

Der Erfindung liegt die Aufgabe zugrunde, eine Mehrkammerpatrone zu schaffen, die die Verwendung von niedrigviskosen Harzen ermöglicht und nebst der Gewährleistung eines schnellen und vollständigen Aushärtens ein Auslaufen des Harzes während oder nach dem Setzvorgang verhindert.

Gemäss der Erfindung wird dies dadurch erreicht, dass wenigstens ein Teil des Härters in dem das Harz und die weiteren Füllstoffe enthaltenden restlichen Bereich der Patrone angeordnet ist.

Durch die erfindungsgemässe Anordnung des Härters wird mit geringerem Mischaufwand eine gleichmässige Verteilung des Härters im Harz ermöglicht und dadurch verhindert, dass einzelne Teile des Harzes nicht oder nur nach sehr längerer Zeit aushärten. Gleichzeitig wird jedoch durch die Füllstoffkonzentration im rückwärtigen Endbereich der Patrone das damit in Berührung kommende Harz gebunden und am Auslaufen gehindert.

Um ein vorzeitiges Aushärten des Harzes durch den Härter zu vermeiden, enthält zweckmässigerweise der restliche Bereich wenigstens eine zerstörbare Kammer für den Härter. Eine solche Kammer kann beispielsweise als im Harz angeordnete, aus Glas oder anderen zerstörbaren Materialien bestehende Ampulle ausgebildet werden. Es ist jedoch auch möglich, mehrere den Härter enthaltende Kapseln im Harz verteilt anzuordnen.

Beim Setzvorgang wird die Patrone samt den darin angeordneten Kammern zerstört und die einzelnen Komponenten miteinander vermischt. Um über den gesamten Verankerungsbereich ein möglichst gleichmässiges Mischungsverhältnis zwischen Harz und Härter zu erreichen, erstreckt sich vorteilhaft die den Härter enthaltende Kammer über den gesamten restlichen Bereich. Das Mischungsverhältnis zwischen Harz und Härter ist somit über die gesamte Länge des restlichen, das Harz enthaltenden Bereiches praktisch konstant. Somit wird gewährleistet, dass auch in diesem Bereich ein vollständiges Aushärten des Harzes erfolgt.

Beim Setzvorgang der erfindungsgemässen Patrone fliesst ein Teil des Harzes in den rückwärtigen, nahezu über den gesamten Querschnitt mit Füllstoffen versehenen Bereich. Um sicherzustellen, dass insbesondere dieser Bereich relativ rasch aushärtet und ein Ausfliessen des noch nicht ausgehärteten Harzes verhindert wird, ist zweckmässigerweise ein Teil des Härters in dem rückwärtigen, Füllstoffe enthaltenden Bereich der Patrone angeordnet. Dieser Teil des Härters kann beispielsweise auf die Oberfläche der Füllstoffe aufgebracht oder zwischen den Füllstoffen verteilt angeordnet werden. Durch das Beschichten der Füllstoffe mit dem Härter wird in jedem Fall eine gleichmässige Verteilung des Härters gewährleistet.

Füllstoffe dienen einerseits dazu, die für das Ausfüllen des Ringspaltes zwischen dem Bohrloch und der Ankerstange erforderliche Menge Harz und Härter zu reduzieren und damit die Kosten zu senken. Die Füllstoffe können jedoch auch eine Erhöhung der Druck- und Scherfestigkeit bewirken. Bei der erfindungsgemässen Patrone besteht eine weitere Aufgabe der Füllstoffe darin, das Auslaufen des noch nicht ausgehärteten Harzes aus dem Bohrloch zu vermeiden. Dies erfolgt hauptsächlich durch die Oberflächenbenetzung der Füllstoffe. Um dies zu verbessern, ist vorzugsweise der volumenmässige Anteil der Füllstoffe im rückwärtigen Bereich der Patrone wesentlich höher als im restlichen Bereich. Eine solche Erhöhung der Dichte der Füllstoffe kann beispielsweise durch entsprechende Formgebung oder geringere Korngrösse der Füllstoffe erreicht werden.

Für eine optimale Festigkeit der Verankerung müssen die Füllstoffe im Harz gleichmässig verteilt werden. So soll verhindert werden, dass sich die Füllstoffe je nach Lage der Patrone verschieben und die einzelnen Bereiche des Harzes eine unterschiedliche Konzentration von Füllstoffen aufweisen. Um eine gleichmässige, unveränderbare Verteilung der Füllstoffe im Harz zu ermöglichen, ist es zweckmässig, dass die Füllstoffe in dem das Harz enthaltenden restlichen Bereich als Hohlkörper mit gegen aussen geöffneten Hohlräumen ausgebildet sind. Durch die Ausbildung der Füllstoffe als Hohlkörper können diese zwar mit ihrer Aussenseite aneinanderstossen und somit relativ zueinander festgelegt werden. Das effektive Verdrängungsvolumen der Füllstoffe ist jedoch gering, da die Hohlkörper auch in ihrem Hohlraum Harz enthalten.

Beim Setzen der Ankerstange soll ein Auslaufen des Harzes vermieden werden. Um dies zu erreichen, ist es vorteilhaft, dass die Hohlkörper als Kapilarröhrchen ausgebildet sind. Solche Kapilarröhrchen binden aufgrund der bekannten Kapilarwirkung einen erheblichen Anteil des Harzes. Die Kapilarröhrchen können beispielsweise auch als mit einer Durchgangsöffnung versehene Perlen ausgebildet werden.

Die Erfindung soll nachstehend anhand der sie beispielsweise wiedergebenden Zeichnungen näher erläutert werden. Es zeigen:

Fig. 1 eine erfindungsgemässe Patrone im Längsschnitt dargestellt;

Fig. 2 eine weitere Ausführung einer erfindungsgemässen, in einem Bohrloch eingesetzten Patrone;

Fig.3 bis Fig. 7 verschiedene Ausführungsformen von Füllstoffen.

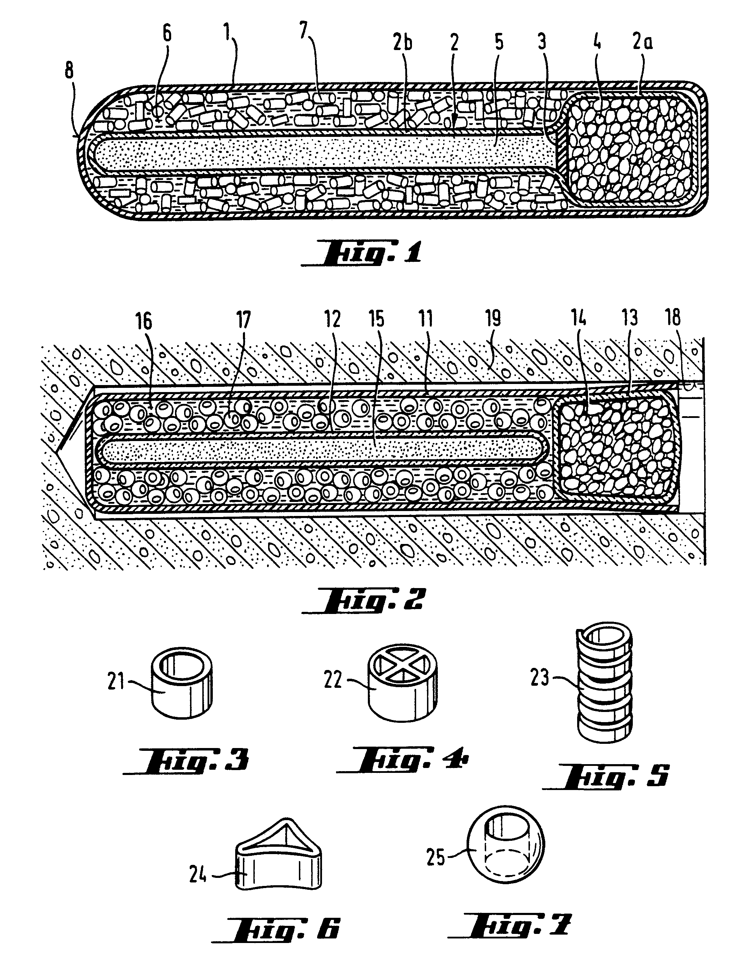

Die aus Fig. 1 ersichtliche Patrone besteht aus einer äusseren Hülle 1 und einer darin angeordneten, insgesamt mit 2 bezeichneten inneren Hülle. Die innere Hülle 2 weist im rückwärtigen Bereich ein im wesentlichen den gesamten Querschnitt der äusseren Hülle 1 einnehmendes Kopfteil 2a sowie im restlichen Bereich ein gegenüber dem Kopfteil 2a im Querschnitt abgesetztes Halsteil 2b auf. Zwischen dem Kopfteil 2a und dem Halsteil 2b ist eine Trennschicht 3 angeordnet. Das Kopfteil 2a enthält Füllstoff 4. Im Halsteil 2b ist Härter 5 angeordnet. Der restliche, das Halsteil 2b umgebende Bereich der äusseren Hülle 1 enthält Harz 6 und darin gleichmässig verteilte Füllstoffe 7. Die Füllstoffe 7 sind als Hohlkörper ausgebildet und machen volumenmässig nur einen geringen Teil des Harzes 6 aus. Beim Setzvorgang wird die Patrone mit dem vorderen Ende 8 voraus in ein Bohrloch eingeführt. Das Kopfteil 2a kommt somit in die Nähe der Bohrlochmündung zu liegen und wird beim Setzvorgang zuerst zerstört. Das Harz 6 wird dabei einerseits durch die Vermischung mit dem Härter 5 sowie hauptsächlich durch die im Kopfteil 2a enthaltenen Füllstoffe am Auslaufen aus dem Bohrloch gehindert.

Die aus Fig. 2 ersichtliche Patrone entspricht funktionell weitgehend der in Fig. 1 dargestellten Ausführung. Sie weist ebenfalls eine äussere Hülle 11 auf, die eine Härterpatrone 12 sowie im rückwärtigen Endbereich eine Füllstoffpatrone 13 aufweist. Die äussere Hülle 11 wird durch die zapfenförmig ausgebildete Füllstoffpatrone 13 verschlossen. Zur Abdichtung der Patrone können die äussere Hülle 11 und die Füllstoffpatrone 13 aufeinander abgestimmte, konische Dichtflächen aufweisen. Die Füllstoffpatrone 13 ist praktisch vollständig mit Füllstoff 14 gefüllt. In der Härterpatrone 12 ist ein pulverförmiger Härter 15 angeordnet. Der die Härterpatrone 12 umgebende Raum ist mit Harz 16 und Füllstoffen 17 ausgefüllt. Die Füllstoffe 17 sind ebenfalls als Hohlkörper ausgebildet und füllen mit ihrer äusseren Form den Raum vollständig aus, so dass die Verteilung dieser Füllstoffe 17 im Harz 16 stets gleich bleibt. Ein wesentlicher Teil des Harzes 16 ist in den Hohlräumen des Füllstoffes 17 enthalten. Die Figur 2 zeigt die in ein Bohrloch 18 eines Aufnahmematerials 19 eingeführte Patrone vor deren Zerstörung beim Eintreiben einer nicht dargestellten Ankerstange. Beim Zerstören der Patrone wird auch hier das noch nicht ausgehärtete Harz 16 durch die Füllstoffe 14 am Auslaufen aus dem Bohrloch 18 gehindert.

Die Figuren 3 bis 7 zeigen verschiedene Ausführungsformen der im Harz angeordneten Füllstoffe. In Fig. 3 sind diese Füllstoffe als Röhrchen 21 ausgebildet. Bei genügend kleiner Dimensionierung dieser Rörhrchen 21 weisen diese eine Kapilarwirkung auf, so dass das darin enthaltene Harz am Auslaufen gehindert wird.

Fig. 4 zeigt eine Rippenhülse 22, die beispielweise durch zwei sich kreuzende Längsrippen verstrebt und somit praktisch nicht verformbar is.

Eine weitere, in Fig. 5 dargestellte Ausführung von Füllstoffen besteht aus einer Wendel 23. Diese Wendel 23 kann beispielsweise aus Metall- oder Kunststoff-Band bzw. -Draht gewickelt werden.

Die in Fig. 6 dargestellten, als Dreikant 24 ausgebildeten Füllstoffe können beispielweise aus stranggepressten Profilen auf die gewünschte Länge abgeschnitten werden.

Die in Fig. 7 dargestellte, als Perle 25 ausgebildete Ausführungsform ist besonders günstig für eine gleichmässige Verteilung der Füllstoffe im Harz. Die Perlen 25 können beispielweise aus Glas oder Keramik bestehen.

**Patentansprüche**

1. Zerstörbare Mehrkammerpatrone zur Verankerung von Ankerstangen in Bohrlöchern eines Aufnahmematerials mittels aushärtender, im wesentlichen aus Harz, Härter und Füllstoffen bestehender Mehrkomponenten-Masse, wobei die Patrone in ihrem in Setzrichtung rückwärtigen Bereich Füllstoffe sowie gegebenenfalls Härter und in ihrem restlichen Bereich Harz und weitere Füllstoffe enthält, dadurch gekennzeichnet, dass wenigstens ein Teil des Härters (5, 15) in dem das Harz (6, 16) und die weiteren Füllstoffe (7, 17) enthaltenden restlichen Bereich der Patrone angeordnet ist.

2. Patrone nach Anspruch 1, dadurch gekennzeichnet, dass der restliche Bereich wenigstens eine zerstörbare Kammer (2b, 12) für den Härter (5, 15) enthält.

3. Patrone nach Anspruch 2, dadurch gekennzeichnet, dass sich die den Härter (5, 15) enthaltende Kammer (2b, 12) entlang dem gesamten restlichen Bereich erstreckt.

4. Patrone nach einem der Ansprüche 1 bis 3, dadurch gekennzeichnet, dass ein Teil des Härters in dem rückwärtigen, Füllstoffe (4, 14) enthaltenden Bereich der Patrone angeordnet ist.

5. Patrone nach einem der Ansprüche 1 bis 4, dadurch gekennzeichnet, dass der volumensmässige Anteil der Füllstoffe (4, 14) im rückwärtigen Bereich der Patrone wesentlich höher ist als im restlichen Bereich.

6. Patrone nach einem der Ansprüche 1 bis 5, dadurch gekennzeichnet, dass die Füllstoffe (7, 17) in dem das Harz (6, 16) enthaltenden restlichen Bereich als Hohlkörper mit gegen aussen geöffneten Hohlräumen ausgebildet sind.

7. Patrone nach Anspruch 6, dadurch gekennzeichnet, dass die Hohlkörper als Kapilarröhrchen ausgebildet sind.

**Claims**

1. Destructible multi-chamber cartridge for the anchorage of anchor rods in drill-holes of a reception material by means of a hardening multi-component composition which consists substantially of resin, hardener and fillers, in which respect the cartridge in its rearward region in the setting direction contains fillers, and possibly hardener, and in its remaining region contains resin and further fillers, characterised in that at least a part of the hardener (5, 15) is arranged in that remaining region of the cartridge which contains the resin (6,16) and the further fillers (7, 17).

2. Cartridge according to claim 1, characterised in that the remaining region contains at least one destructible chamber (2b, 12) for the hardener (5, 15)

3. Cartridge according to claim 2, characterised in that the chamber (2b, 12) which contains the hardener (5, 15) extends along the entire remaining region.

4. Cartridge according to one of claims 1 to 3, characterised in that a part of the hardener is arranged in the rearward region of the cartridge which contains fillers (4, 14).

5. Cartridge according to one of claims 1 to 4, characterised in that the proportion by volume of the fillers (4, 14) in the rearward region of the cartridge is considerabiy higher than in the remaining region.

6. Cartridge according to one of claims 1 to 5, characterised in that the fillers (7, 17) in the remaining region which contains the resin (6, 16) are designed as hollow bodies having cavities which are open to their exterior.

7. Cartridge according to claim 6, characterised in that the hollow bodies are designed as capillary tubes.

**Revendications**

1. Cartouche destructible à chambres multiples destinée à la fixation de boulons d'ancrage dans des perçages d'un matériau de réception au moyen d'une masse durcissable à plusieurs constituants composée essentiellement de résine, d'un durcisseur et de matières de remplissage, la cartouche contenant, dans sa section postérieure dans la direction d'enfoncement, des matières de remplissage ainsi qu'éventuellement un durcisseur et, dans la section restante, de la résine et d'autres matières de remplissage, caractérisée en ce qu'au moins une partie du durcisseur (5, 15) est placée dans la section restante de la cartouche qui contient la résine (6, 16) et les autres matières de remplissage (7, 17)

2. Cartouche selon la revendication 1, caractérisée en ce que la section restante comprend au moins une chambre destructible (2b, 12) pour le durcisseur (5, 15).

3. Cartouche selon la revendication 2, caractérisée en ce que la chambre (2b, 12) contenant le durcisseur (5, 15) s'étend le long de l'ensemble de la section restante.

4. Cartouche selon l'une quelconque des revendications 1 à 3, caractérisée en ce qu'une partie du durcisseur est disposée dans la section postérieure de la cartouche qui contient des matières de remplissage (4, 14).

5. Cartouche selon l'une quelconque des revendications 1 à 4, caractérisée en ce que le volume des matières de remplissage (4, 14) dans la section postérieure de la cartouche est beaucoup plus grand que celui dans la section restante.

6. Cartouche selon l'une quelconque des

**0 182 039**

revendications 1 à 5, caractérisée en ce que les matières de remplissage (7, 17) dans la section restante contenant la résine (6, 16) sont conformées en corps creux avec des cavités ouvertes vers l'extérieur.

7. Cartouche selon la revendication 6, caractérisée en ce que les corps creux sont conformés en tubes capillaires.

0 182 039

Fig. 1

Fig. 2

Fig. 3

Fig. 4

Fig. 5

Fig. 6

Fig. 7

1